# EUROPÄISCHE PATENTSCHRIFT

(11) **EP 3 005 131 B1**
(45) Veröffentlichungstag und Bekanntmachung des Hinweises auf die Patenterteilung: **14.11.2018**
(21) Anmeldenummer: 14725676.2
(22) Anmeldetag: 15.05.2014
(51) Int. Cl.: G06F 13/42

(54) **VERFAHREN ZUR DATENKOMMUNIKATION, KOMMUNIKATIONSCONTROLLER UND SCHALTUNGSANORDNUNG**
METHOD FOR COMMUNICATING DATA, COMMUNICATION CONTROLLER AND CIRCUIT ARRANGEMENT
PROCÉDÉ DE COMMUNICATION DE DONNÉES, CONTRÔLEUR DE COMMUNICATION ET CIRCUITERIE

(30) Priorität: 05.06.2013 DE 102013210465; 19.12.2013 DE 102013226765
(43) Veröffentlichungstag der Anmeldung: 13.04.2016
(73) Patentinhaber: Continental Teves AG & Co. OHG, 60488 Frankfurt am Main (DE)
(72) Erfinder: BAUMEISTER, Daniel, 63741 Aschaffenburg (DE); JANISZEWSKI, Ireneusz, 64367 Mühltal (DE)
(86) Internationale Anmeldenummer: PCT/EP2014/059963
(87) Internationale Veröffentlichungsnummer: WO 2014/195102

(56) Entgegenhaltungen:
- DE-A1-102011 007 437
- US-A- 5 797 038
- US-A1- 2011 072 297

## Beschreibung

Die vorliegende Erfindung betrifft ein Verfahren gemäß Oberbegriff von Anspruch 1, einen Kommunikationscontroller gemäß Oberbegriff von Anspruch 6 sowie eine Schaltungsanordnung gemäß Oberbegriff von Anspruch 9.

US 5 797 038 A zeigt ein Verfahren für eine serielle Kommunikation zwischen einem Hostgerät und einem Peripheriegerät mittels einer Schnittstelle. Die Kommunikation kann dabei in einem Interrupt-Response-Modus oder einem Befehlsmodus betrieben werden. Die Schnittstelle weist u.a. eine Taktleitung auf. Das Peripheriegerät kann Informationen in ein Befehlsregister für eine Dekodierung schreiben.

Kraftfahrzeugsteuergeräte, insbesondere für elektronische bzw. elektrohydraulische Bremssysteme, umfassen in an sich bekannter Weise wenigstens ein Mikrocontrollersystem, bestehend aus einer ein- oder mehrkernigen Mikrocontrollereinheit (MCU) und einem ein- oder mehrkernigen integrierten Gemischtsignalschaltkreis (Mixed-Signal IC) als Leistungssteuereinheit (PCU) . Die MCU wird insbesondere verwendet, um die notwendigen Berechnungen zum Betrieb des Kraftfahrzeugsystems auszuführen, wobei die PCU beispielsweise zur Ansteuerung von Leistungstransistoren vorgesehen ist, um das Kraftfahrzeugsystem zu steuern bzw. zu regeln. MCU und PCU kommunizieren dabei über eine sogenannte Serielle-Peripherie-Schnittstelle (SPI) miteinander, welche als De-facto-Standard bekannt ist. Die SPI arbeitet im Duplex-Betrieb mit fünf Signalleitungen:
- SIMO - Datensignal: Slave Eingang, Master Out;
- SOMI - Datensignal: Slave Ausgang, Master Eingang;
- SCK - vom Master ausgegebenes Taktsignal und
- zwei Teilnehmer-Auswahl Leitungen, mittels denen der Master festlegt mit welchem Busteilnehmer bzw. Slave er kommunizieren möchte.

Die MCU ist gemäß der hier beschriebenen Konfiguration der Master, der das Taktsignal bereitstellt. Während die MCU Daten zur PCU auf der SIMO-Leitung sendet, werden gleichzeitig Daten von der PCU zur MCU auf der SOMI-Leitung übertragen. Für diese umlaufende Kommunikation steht eine halbe Taktsignal-Periode des Taktsignals (SCK) zur Verfügung. Diese SPI-Implementierungen stellen priorisierbare, lokale Datenspeicher in der MCU bereit, die es erlauben laufzeiteffizient die SPI-Kommunikation zu planen und auszuführen. Lediglich für nicht planbare Transfers wird eine Polling-basierte Steuerung verwendet. Solchermaßen bekannte MCU/PCU Konfigurationen erreichen damit Transferraten beispielsweise in der Größenordnung von 8 bis 11 MBd (Mega-Baud) .

Die Limitierung der Transferraten dieser bekannten Systeme beruht zum einen auf den zeitlichen Randbedingungen der umlaufenden Kommunikation der SPI-Schnittstelle, die durch das Propagieren des Taktsignals vom Master zum Slave bestimmt wird, und zum anderen auf der technologischen Leistungsfähigkeit - mit anderen Worten der Performanz - insbesondere der digitalen Komponenten der PCU. Der Herstellungsprozess der PCU stellt analoge Leistungstransistoren, analoge Transistoren und digitale Transistoren bereit und kann daher nicht auf die Fertigung digitaler Transistoren optimiert werden. Dadurch bleibt die maximal erreichbare Taktfrequenz, verglichen mit der in diesem Sinne optimierbaren MCU, um einen Faktor 4 bis 5 zurück. Während die Taktfrequenz der MCU beispielsweise 120 bis 160 MHz beträgt, kann mit dem internen Takt der PCU somit lediglich 20 bis 40 MHz erreicht werden.
Daher ist es Aufgabe der Erfindung, ein Mikrocontrollersystem für ein Kraftfahrzeugsteuergerät bereitzustellen, welches zumindest zwei Schaltkreise, beispielsweise einer Mikrocontrollereinheit (MCU) und einem Gemischtsignalschaltkreis (PCU), umfasst, welches eine verbesserte Leistungsfähigkeit und/oder höhere Transferraten zwischen den Schaltkreisen ermöglicht.
Diese Aufgabe wird durch ein Verfahren gemäß Anspruch 1, einen Kommunikationscontroller gemäß Anspruch 6 sowie eine Schaltungsanordnung gemäß Anspruch 9 gelöst.
Die Erfindung betrifft ein Verfahren zur Datenkommunikation zwischen einem ersten Schaltkreis und einem zweiten Schaltkreis, welches sich dadurch auszeichnet, dass in einem Vollduplex-Betrieb eine serielle Datenübertragung zwischen dem ersten Schaltkreis und dem zweiten Schaltkreis vorgenommen wird und eine Bereitstellung eines Taktsignals von einem Sender der Daten erfolgt, wobei der erste Schaltkreis und der zweite Schaltkreis die Daten mit verschiedenen Frequenzen senden. Damit liegt in vorteilhafter Weise eine Entkopplung der Transfers zwischen Kommunikationsknoten, z.B. Kommunikationscontrollern, des ersten Schaltkreises und des zweiten Schaltkreises vor und es kann eine optimale Anpassung der Kommunikationsgeschwindigkeit an eine technologische Leistungsfähigkeit des jeweiligen Schaltkreises erreicht werden. In vorteilhafter Weise können durch das erfindungsgemäße Verfahren höhere Transferraten zwischen zumindest zwei Schaltkreisen unterschiedlicher Leistungsfähigkeit, welche sich beispielsweise auf einem identischen Schaltungsträger und/oder in einem gemeinsamen integrierten Schaltkreisgehäuse befinden, erzielt werden. Ebenfalls wird vorteilhaft eine höhere Leistungsfähigkeit eines die Schaltkreise umfassenden Systems erreicht. Kritische Beiträge, wie zum Beispiel Laufzeitverzögerungen, können entsprechend eliminiert werden.

Bevorzugt sind die zwei Schaltkreise als Mikrocontrollereinheit und als Gemischtsignalschaltkreis eines Kraftfahrzeugsteuergeräts ausgebildet.

Gemäß einer bevorzugten Ausführungsform des Verfahrens erfolgt die Bereitstellung des Taktsignals für eine Dekodierung von Daten durch einen Empfänger von dem Sender der Daten.

Bevorzugt ist eine uni-direktionale Funktionsweise vorgesehen, wobei ein Sender von Daten nach dem Senden keine Information von einem Empfänger darüber erhält, ob die mittels der Daten gesendete Nachricht korrekt empfangen wurde. Dies ermöglicht in vorteilhafter Weise eine Verringerung eines aufkommenden transferierten Datenvolumens.

Eine Datenkommunikation zwischen wenigstens einer durch den ersten Schaltkreis umfassten zentralen Recheneinheit und wenigstens einem durch den ersten Schaltkreis umfassten Kommunikationscontroller erfolgt bevorzugt mittels Speicherdirektzugriff. Potentielle Laufzeitverzögerungen auf Applikationssoftware, welche durch die erfindungsgemäße Schaltungsanordnung bzw. den ersten und/oder den zweiten Schaltkreis ausgeführt wird, lassen sich somit verringern.

Bevorzugt ist eine Multi-Slave Funktionalität vorgesehen, wobei ein als Master agierender Schaltkreis, insbesondere der erste Schaltkreis, derart ausgestaltet ist, dass dieser eine Kommunikation mit einer Mehrzahl an Slaves vornehmen kann.

Die Erfindung beschreibt weiterhin einen Kommunikationscontroller zur Ausführung des erfindungsgemäßen Verfahrens.

Der Kommunikationscontroller weist zumindest die Ein- und Ausgänge
- Datenausgang Sender (TX),
- Taktausgang Sender (TXCLK),
- Slave-Auswahlleitung/-en (SSn),
- Dateneingang Empfänger (RX) und
- Takteingang Empfänger (RXCLK)
auf.

Für eine Anzahl n Slaves umfasst der Kommunikationscontroller bevorzugt n Slave-Auswahlleitung/-en zur Auswahl eines Slaves, mit welchem eine Kommunikation vorgesehen ist.

Gemäß einer bevorzugten Ausführungsform umfasst der Kommunikationscontroller FIFO-Speicher. Besonders bevorzugt sind für zu sendende Daten, empfangene Daten, Speicherdirektzugriff und Interrupt-Funktionalitäten getrennte FIFO-Speicher vorgesehen.

Die Erfindung beschreibt zudem eine Schaltungsanordnung in einem Kraftfahrzeugsteuergerät umfassend eine Mehrzahl an Schaltkreisen, welche derart ausgestaltet ist, dass die Schaltkreise untereinander kommunizieren können und sich weiterhin dadurch auszeichnet, dass diese wenigstens einen erfindungsgemäßen Kommunikationscontroller umfasst und/oder das erfindungsgemäße Verfahren ausführt. Ein erster Schaltkreis und ein zweiter Schaltkreis weisen vorzugsweise unterschiedliche Leistungsfähigkeiten, insbesondere unterschiedliche Arbeitstaktfrequenzen, auf.

Das Kraftfahrzeugsteuergerät ist bevorzugt für ein Kraftfahrzeugbremssystem ausgebildet.

Bevorzugt ist der erste Schaltkreis eine Mikrocontrollereinheit und der zweite Schaltkreis ist bevorzugt ein Gemischtsignalschaltkreis zur Ansteuerung von Leistungselektronik.

Für die MCU und PCU und/oder die dadurch umfassten Kommunikationscontroller wird während des Entwurfs bzw. der Entwicklung dieser Hardware bevorzugt eine höhere Abstraktionsebene einer Beschreibungssprache verwendet, wie beispielsweise die Registertransferebene (RTL). Dabei können lediglich MCU-spezifische Elemente, wie z.B. die DMA-Schnittstelle, durch Parametrisierung der RTL-Beschreibung in der PCU-Variante entfallen, um in vorteilhafter Weise die Größe des Schaltkreises und damit die Kosten zu minimieren.

Weitere bevorzugte Ausführungsformen ergeben sich aus der nachfolgenden Beschreibung eines Ausführungsbeispiels anhand einer Figur.

### In Prinzipdarstellung zeigt

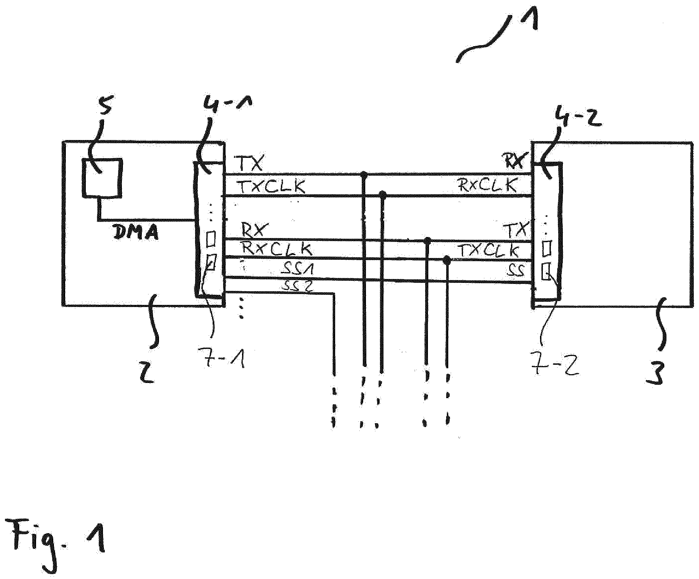

Fig. 1 Mikrocontrollersystem 1, umfassend Mikrocontrollereinheit 2 (MCU) und Gemischtsignalschaltkreis 3 (PCU), welche mittels der erfindungsgemäßen Kommunikationsschnittstelle kommunizieren.

Das erfindungsgemäße Verfahren bzw. die, durch die Kommunikationscontroller 4-1 und 4-2 ausgebildete serielle Kommunikationsschnittstelle (MCU-PCU-Link: MPL) arbeitet im Vollduplex-Betrieb, wodurch ein simultaner, bi-direktionaler Datentransfer zwischen MCU 2 und PCU 3 realisiert wird. Gemäß diesem Ausführungsbeispiel agiert die MCU 2 als Master, wobei der durch die MCU 2 umfasste Kommunikationscontroller 4-1 dabei die folgenden Ein- bzw. Ausgänge aufweist:
∘ Datenausgang Sender TX
∘ Taktausgang Sender TXCLK
∘ Slave-Auswahlleitung Ausgang 1 (SS1)
∘ Slave-Auswahlleitung 2 Ausgang (SS2)
∘ Dateneingang Empfänger (RX)
∘ Takteingang Empfänger (RXCLK)

Der durch die als Slave ausgelegt PCU 2 Kommunikationscontroller 4-2 weist die Ein- bzw. Ausgänge:
∘ Datenausgang Sender TX
∘ Taktausgang Sender TXCLK
∘ Slave-Auswahlleitung Eingang (SS)
∘ Dateneingang Empfänger (RX)
∘ Takteingang Empfänger (RXCLK)
auf.

Mittels TXCLK auf Senderseite und empfängerseitigem RXCLK erfolgt eine quellsynchrone Bereitstellung des Taktsignals des Senders. Der jeweilige Sender von Daten, z.B. MCU 2, generiert das zugehörige Taktsignal und stellt dieses dem Empfänger, z.B. der PCU 3, insbesondere zur Synchronisierung an die Phasenlage und/oder zur Dekodierung der eigehenden Daten bereit. Im Falle unterschiedlicher Arbeitstaktfrequenzen von MCU 2 und PCU 3 stellen diese, jeweilige zu sendende Daten auch mit diesen verschiedenen Frequenzen bereit, wodurch die Datentransfers zwischen MCU 2 und PCU 3 entkoppelt sind. Kommunikationscontroller 4-1 und 4-2 bzw. die MPL arbeiten entsprechend diesem Beispiel zudem uni-direktional, wodurch der Sender von Daten nach dem Senden keine Information vom Empfänger darüber erhält, ob die mittels der Daten gesendete Nachricht korrekt empfangen wurde.

Die interne Kommunikation zwischen der durch MCU 2 umfassten zentralen Recheneinheit (CPU) 5 und dem MCU 2 seitigen Kommunikationscontroller 4-1 erfolgt mittels Speicherdirektzugriff DMA, wobei das DMA-Konzept an sich bekannte Implementierungen mit priorisierbaren Datenspeichern ersetzt. Die Laufzeitauswirkung auf durch Mikrocontrollersystem 1 ausgeführte Applikationssoftware lässt sich somit minimieren.

Mittels der Slave-Auswahlleitungen SSn wählt der Master den Slave aus, mit welchem eine Kommunikation stattfinden soll. Hierzu weist der Master, beispielsgemäß die MCU 2, bzw. durch diese umfassten Kommunikationskontroller 4-1 eine der Anzahl n der vorhandenen Slave-Teilnehmer entsprechende Anzahl n an Slave-Auswahlleitungen SSn auf. Jeder Slave bzw. durch diesen umfassten Kommunikationscontroller 4-2 umfasst einen Eingang der Slave-Auswahlleitung SS. Ist ein Slave für die Kommunikation mit dem Master ausgewählt, ist dieser für die durchzuführende Kommunikation bereit, andernfalls erfolgt kein mithören auf den weiteren Takt- und/oder Datenleitungen des Busses. Es können weitere als Slave agierende funktionelle Baugruppen (nicht dargestellt) vorgesehen sein, was in Fig. 1 über die weitere Auswahlleitung SS2 bzw. die Verzweigungen der weiteren Busleitungen angezeigt ist.

Die Kommunikationscontroller 4-1,4-2 weisen jeweils, getrennte FIFO-Speicher 7-1,7-2 beispielsweise für zu sendende Daten, empfangene Daten, Speicherdirektzugriff sowie Interrupt-Funktionen auf.

## Patentansprüche

1. Verfahren zur Datenkommunikation (MPL) zwischen einem ersten Schaltkreis (MCU,2) und einem zweiten Schaltkreis (PCU,3), wobei in einem Vollduplex-Betrieb eine serielle Datenübertragung zwischen dem ersten Schaltkreis (MCU,2) und dem zweiten Schaltkreis (PCU,3) vorgenommen wird, **dadurch gekennzeichnet, dass** eine Bereitstellung eines Taktsignals (TXCLK) von einem jeweiligen Sender (MCU, 2, PCU, 3) der Daten erfolgt, wobei der erste Schaltkreis (MCU,2) und der zweite Schaltkreis (PCU,3) die Daten mit verschiedenen Frequenzen senden.

2. Verfahren gemäß Anspruch 1, **dadurch gekennzeichnet, dass** eine uni-direktionale Funktionsweise vorgesehen ist, wobei ein Sender (MCU,2,PCU,3) von Daten nach dem Senden keine Information von einem Empfänger (MCU,2,PCU,3) darüber erhält, ob die mittels der Daten gesendete Nachricht korrekt empfangen wurde.

3. Verfahren gemäß einem der vorhergehenden Ansprüche, **dadurch gekennzeichnet, dass** die Bereitstellung des Taktsignals (TXCLK) von dem jeweiligen Sender (MCU,2,PCU,3) für eine Dekodierung der Daten durch den Empfänger (MCU,2,PCU3) erfolgt.

4. Verfahren gemäß einem der vorhergehenden Ansprüche, **dadurch gekennzeichnet, dass** eine Datenkommunikation zwischen wenigstens einer durch den ersten Schaltkreis (MCU,2) umfassten zentralen Recheneinheit (CPU,5) und wenigstens einem durch den ersten Schaltkreis (MCU,2) umfassten Kommunikationscontroller (4-1,4-2) mittels Speicherdirektzugriff (DMA) erfolgt.

5. Verfahren gemäß einem der vorhergehenden Ansprüche, **dadurch gekennzeichnet, dass** eine Multi-Slave Funktionalität vorgesehen ist, wobei ein als Master agierender Schaltkreis, derart ausgestaltet ist, dass dieser eine Kommunikation mit einer Mehrzahl an Slaves (PCU,3) vornehmen kann.

6. Kommunikationscontroller (4-1,4-2), **dadurch gekennzeichnet, dass** dieser ein Verfahren gemäß einem der Ansprüche 1 bis 5 ausführt.

7. Kommunikationscontroller (4-1,4-2) gemäß Anspruch 6, **dadurch gekennzeichnet, dass** dieser zumindest die Ein- und Ausgänge
• Datenausgang Sender (TX),
• Taktausgang Sender (TXCLK),
• Slave-Auswahlleitung/-en (SS,SSn),
• Dateneingang Empfänger (RX)und
• Takteingang Empfänger (RXCLK)
aufweist.

8. Kommunikationscontroller (4-1,4-2) gemäß Anspruch 6 oder 7, **dadurch gekennzeichnet, dass** dieser FIFO-Speicher (7-1,7-2) umfasst.

9. Schaltungsanordnung (1) in einem Kraftfahrzeugsteuergerät umfassend eine Mehrzahl an Schaltkreisen (MCU,2,PCU,3), welche derart ausgestaltet ist, dass die Schaltkreise untereinander kommunizieren können, **dadurch gekennzeichnet, dass** diese wenigstens einen Kommunikationscontroller (4-1,4-2) gemäß einem der Ansprüche 6 bis 8 umfasst und/oder ein Verfahren gemäß einem der Ansprüche 1 bis 5 ausführt.

10. Schaltungsanordnung gemäß Anspruch 9, **dadurch gekennzeichnet, dass** ein erster Schaltkreis (MCU,2) und ein zweiter Schaltkreis (PCU,3) unterschiedliche Leistungsfähigkeiten, insbesondere unterschiedliche Arbeitstaktfrequenzen, aufweisen.

11. Schaltungsanordnung gemäß Anspruch 9 oder 10, **dadurch gekennzeichnet, dass** der erste Schaltkreis (MCU,2) eine Mikrocontrollereinheit und der zweite Schaltkreis (PCU,3) ein Gemischtsignalschaltkreis zur Ansteuerung von Leistungselektronik ist.

12. Verfahren nach einem der Ansprüche 1 bis 5, **dadurch gekennzeichnet, dass** der erste Schaltkreis (MCU,2) und der zweite Schaltkreis (PCU,3) als eine Mikrocontrollereinheit (MCU,2) und ein Gemischtsignalschaltkreis (PCU,3) eines Kraftfahrzeugsteuergeräts ausgebildet sind.

13. Verfahren nach Anspruch 5, **dadurch gekennzeichnet, dass** der als Master agierende Schaltkreis der erste Schaltkreis (MCU,2) ist.

14. Kommunikationscontroller nach Anspruch 8, **dadurch gekennzeichnet, dass** für zu sendende Daten, empfangene Daten, Speicherdirektzugriff und Interrupt-Funktionalitäten getrennte FIFO-Speicher (7-1, 7-2) vorgesehen sind.

15. Schaltungsanordnung nach einem der Ansprüche 9 bis 11, **dadurch gekennzeichnet, dass** das Kraftfahrzeugsteuergerät für die Verwendung in einem Kraftfahrzeugbremssystem ausgebildet ist.

## Claims

1. Method for data communication (MPL) between a first circuit (MCU, 2) and a second circuit (PCU, 3), wherein in a full-duplex mode, serial data transmission takes place between the first circuit (MCU, 2) and the second circuit (PCU, 3), **characterized in that** a clock signal (TXCLK) is provided by a respective transmitter (MCU, 2, PCU, 3) of the data, wherein the first circuit (MCU, 2) and the second circuit (PCU, 3) transmit the data at different frequencies.

2. Method according to Claim 1, **characterized in that** unidirectional operation is provided, wherein a transmitter (MCU, 2, PCU, 3) of data, after the transmission, does not receive any information from a receiver (MCU, 2, PCU, 3) about whether the message sent by means of the data was received correctly.

3. Method according to any of the previous claims, **characterized in that** the clock signal (TXCLK) is provided by the respective transmitter (MCU, 2, PCU, 3) for decoding the data by the receiver (MCU, 2, PCU, 3).

4. Method according to any of the previous claims, **characterized in that** data communication between at least one central processing unit (CPU, 5), which is contained in the first circuit (MCU, 2), and a communication controller (4-1, 4-2) contained in the first circuit (MCU, 2) is performed by means of direct memory access (DMA) .

5. Method according to any of the previous claims, **characterized in that** multi-slave functionality is provided, wherein a circuit acting as the master is designed such that it can communicate with a plurality of slaves (PCU, 3).

6. Communication controller (4-1, 4-2) **characterized in that** it implements a method according to any of Claims 1 to 5.

7. Communication controller (4-1, 4-2) according to Claim 6, **characterized in that** it comprises at least the following inputs and outputs:
• transmitter data output (TX);
• transmitter clock output (TXCLK);
• slave-select line(s) (SSn);
• receiver data input (RX); and
• receiver clock input (RXCLK).

8. Communication controller (4-1, 4-2) according to Claim 6 or 7, **characterized in that** it comprises FIFO memories (7-1, 7-2).

9. Circuit arrangement (1) in a motor-vehicle electronic control unit, which circuit arrangement comprises a plurality of circuits (MCU 2, PCU, 3) which are designed such that the circuits can communicate with one another, **characterized in that** it comprises at least one communication controller (4-1, 4-2) according to any of Claims 6 to 8 and/or implements a method according to any of Claims 1 to 5.

10. Circuit arrangement according to Claim 9, **characterized in that** a first circuit (MCU, 2) and a second circuit (PCU, 3) have different performances, in particular different operating clock frequencies.

11. Circuit arrangement according to Claim 9 or 10, **characterized in that** the first circuit (MCU, 2) is a microcontroller unit, and the second circuit (PCU, 3) is a mixed-signal IC for driving power electronics.

12. Method according to one of Claims 1 to 5, **characterized in that** the first circuit (MCU,2) and the second circuit (PCU,3) are configured as a microcontroller unit (MCU,2) and a mixed-signal IC (PCU,3) of a motor vehicle control unit.

13. Method according to Claim 5, **characterized in that** the circuit that acts as the master is the first circuit (MCU,2).

14. Communication controller according to Claim 8, **characterized in that** separate FIFO memories (7-1, 7-2) are provided for data to be transmitted, received data, direct memory access, and interrupt functions.

15. Circuit arrangement according to one of Claims 9 to 11, **characterized in that** the motor vehicle control unit is configured for use in a motor vehicle braking system.

## Revendications

1. Procédé de communication de données (MPL) entre un premier circuit (MCU, 2) et un deuxième circuit (PCU, 3), lors duquel, dans un mode en duplex intégral, il est procédé à un transfert de données sériel entre le premier circuit (MCU, 2) et le deuxième circuit (PCU, 3), **caractérisé en ce qu'**il s'effectue une mise à disposition d'un signal d'horloge (TXCLK) par un émetteur (MCU, 2, PCU, 3) respectif des données, le premier circuit (MCU, 2) et le deuxième circuit (PCU, 3) envoyant les données à différentes fréquences.

2. Procédé selon la revendication 1, **caractérisé en ce qu'**il est prévu un mode de fonctionnement unidirectionnel, après l'envoi, un émetteur (MCU, 2, PCU, 3) de données ne recevant de la part d'un récepteur (MCU, 2, PCU, 3) aucune information permettant de savoir si le message envoyé au moyen des données a été correctement réceptionné.

3. Procédé selon l'une quelconque des revendications précédentes, **caractérisé en ce que** la mise à disposition du signal d'horloge (TXCLK) par l'émetteur (MCU, 2, PCU, 3) respectif s'effectue pour un décodage des données par le récepteur (MCU, 2, PCU, 3).

4. Procédé selon l'une quelconque des revendications précédentes, **caractérisé en ce qu'**une communication de données entre au moins une unité centrale de calcul (CPU, 5) comprise dans le premier circuit (MCU, 2) et au moins un contrôleur de communication (4-1, 4-2) compris dans le premier circuit (MCU, 2) s'effectue par accès direct à la mémoire (DMA).

5. Procédé selon l'une quelconque des revendications précédentes, **caractérisé en ce qu'**il est prévu une fonctionnalité multi-esclaves, un circuit agissant en tant que maître étant conçu de sorte à être en mesure de pouvoir procéder à une communication avec une pluralité d'esclaves (PCU, 3).

6. Contrôleur de communication (4-1, 4-2), **caractérisé en ce que** ce dernier réalise un procédé selon l'une quelconque des revendications 1 à 5.

7. Contrôleur de communication (4-1, 4-2) selon la revendication 6, **caractérisé en ce que** ce dernier comporte au moins les entrées et sorties
• sortie de données émetteur (TX),
• sortie d'horloge émetteur (TXCLK),
• ligne(s) de sélection d'esclave (SS, SSn),
• entrée de données récepteur (RX) et
• entrée d'horloge récepteur (RXCLK).

8. Contrôleur de communication (4-1, 4-2) selon la revendication 6 ou 7, **caractérisé en ce que** ce dernier comprend des mémoires FIFO (7-1, 7-2).

9. Agencement de circuits (1) dans un instrument de commande de véhicule automobile, comprenant une pluralité de circuits (MCU, 2, PCU, 3), lesquels sont conçus de telle sorte que les circuits puissent communiquer entre eux, **caractérisé en ce que** celui-ci comprend au moins un contrôleur de communication (4-1, 4-2) selon l'une quelconque des revendications 6 à 8 et/ou met en oeuvre un procédé selon l'une quelconque des revendications 1 à 5.

10. Agencement de circuits selon la revendication 9, **caractérisé en ce qu'**un premier circuit (MCU, 2) et un deuxième circuit (PCU, 3) font preuve de différentes capacités, notamment de différentes fréquences de cycle.

11. Agencement de circuits selon la revendication 9 ou 10, **caractérisé en ce que** le premier circuit (MCU, 2) est une unité de microcontrôleur et le deuxième circuit (PCU, 3) est un circuit à signal mixte, destiné à activer des électroniques de puissance.

12. Procédé selon l'une quelconque des revendications 1 à 5, **caractérisé en ce que** le premier circuit (MCU, 2) et le deuxième circuit (PCU, 3) sont conçus sous la forme d'une unité de microcontrôleur (MCU, 2) et d'un circuit à signal mixte (PCU, 3) d'un instrument de commande d'un véhicule automobile.

13. Procédé selon la revendication 5, **caractérisé en ce que** le circuit agissant en maître est le premier circuit (MCU, 2).

14. Contrôleur de communication selon la revendication 8, **caractérisé en ce que** des mémoires FIFO (7-1, 7-2) séparées sont prévues pour les données à émettre, les données réceptionnées, l'accès direct à la mémoire et des fonctionnalités d'interruption.

15. Agencement de circuits selon l'une quelconque des revendications 9 à 11, **caractérisé en ce que** l'instrument de commande de véhicule automobile est conçu pour l'utilisation dans un système de freinage de véhicule automobile.
